# EUROPÄISCHE PATENTANMELDUNG

(11) **EP 2 653 973 A1**
(43) Veröffentlichungstag der Anmeldung: **23.10.2013**
(21) Anmeldenummer: 12164867.9
(22) Anmeldetag: 20.04.2012
(51) Int. Cl.: G06F 12/02

(54) **Verfahren zur Verlängerung der Lebensdauer eines physikalischen Flash-Speichers**

(71) Anmelder: Siemens Aktiengesellschaft, 80333 München (DE)
(72) Erfinder: Gürtler, Tobias, 92224 Amberg (DE); Lang, Georg, 92237 Sulzbach-Rosenberg (DE)

(57) **Zusammenfassung**

Die Erfindung betrifft ein Verfahren zur Verlängerung der Lebensdauer eines physikalischen Flash-Speichers (100) mit physikalischen Speicherblöcken (102), wobei jeder der physikalischen Speicherblöcke (102) physikalische Sektoren (103) aufweist, wobei jeder der physikalischen Sektoren (103) dazu ausgebildet ist, einen Wert, welcher einem logischen Sektor (114) eines logischen Speicherblocks (112) eines logischen Speichers (110) zugeordnet ist, zu empfangen und zu speichern, wobei die Anzahl der physikalischen Sektoren (103) pro physikalischen Speicherblock (102) größer als die Anzahl der logischen Sektoren (114) pro logischem Speicherblock (112) ist.

## Beschreibung

Die Erfindung betrifft ein Verfahren zur Verlängerung der Lebensdauer eines physikalischen Flash-Speichers mit physikalischen Speicherblöcken, eine Vorrichtung zur Steuerung eines Verfahrens zur Verlängerung der Lebensdauer eines physikalischen Flash-Speichers sowie ein Computerprogrammprodukt.

Im Umfeld von speicherprogrammierbaren Steuerungen (SPS) werden zur Speicherung von persistenten Daten Flash-Speicher verwendet. Flash-Speicher zeichnen sich dadurch aus, dass auch wenn eine Energieversorgung zum Flash-Speicher getrennt wird, die zuvor auf dem Flash-Speicher gespeicherten Daten weiterhin gespeichert bleiben.

Von einem im Umfeld einer speicherprogrammierbaren Steuerung eingesetzten Flash-Speicher wird unter anderem eine hohe Lebensdauer, eine lange Data Retention Time sowie eine hohe Übertragungsgeschwindigkeit auch bei geringen Datenmengen verlangt. Die technologische Weiterentwicklung der Flash-Speicher, welche mit einer Förderung von Shrink-Prozessen zur Vergrößerung der Speichermenge auf gleicher Fläche zur Reduktion der Kosten pro Datenmenge und zur Erhöhung der Performance für große Datenmengen verbunden sind, wirkt nun den oben genannten Anforderungen bei Einsatz des Flash-Speichers im industriellen Umfeld entgegen. Die Shrink-Prozesse bewirken eine Beschleunigung der Alterung des physikalischen Speichers, eine Zunahme der Bitfehlerrate, eine Abnahme der allgemeinen Lebensdauer des Flash-Speichers sowie eine Abnahme der "Single Sector Random Rate"-Performance.

Der Erfindung liegt die Aufgabe zugrunde, ein Verfahren zur Verlängerung der Lebensdauer eines physikalischen Flash-Speichers, eine Vorrichtung zur Steuerung eines Verfahrens zur Verlängerung der Lebensdauer eines physikalischen Flash-Speichers sowie ein Computerprogrammprodukt zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Es wird ein Verfahren zur Verlängerung der Lebensdauer eines physikalischen Flash-Speichers mit physikalischen Speicherblöcken geschaffen, wobei jeder der physikalischen Speicherblöcke physikalische Sektoren aufweist, wobei jeder der physikalischen Sektoren dazu ausgebildet ist, einen Wert, welcher einem logischen Sektor eines logischen Speicherblocks eines logischen Speichers zugeordnet ist, zu empfangenen und zu speichern, wobei die Anzahl der physikalischen Sektoren pro physikalischem Speicherblock größer als die Anzahl der logischen Sektoren pro logischem Speicherblock ist, wobei das Verfahren folgende Schritte umfasst:
a) Zuordnung eines aktuellen Werts dem logischen Sektor,
b) Speicherung des aktuellen Werts in einem dem logischen Sektor zugeordneten aktuellen physikalischen Sektor eines physikalischen Speicherblocks,
c) Zuordnung eines nachfolgenden aktuellen Werts dem logischen Sektor, wodurch zum Erhalt eines neuen aktuellen Werts der aktuelle Wert im logischen Sektor mit dem nachfolgenden Wert überschrieben wird,
d) Speicherung des aktuellen Werts in einem dem aktuellen physikalischen Sektor logisch nachgeordneten physikalischen Sektor des physikalischen Speicherblocks und damit in einem neuen aktuellen physikalischen Sektor,
e) Wiederholung der Schritte c - d, solange bis alle physikalischen Sektoren des physikalischen Speicherblocks einen Wert aufweisen,
f) im Falle, dass alle physikalischen Sektoren des physikalischen Speicherblocks einen Wert aufweisen und erneut ein nachfolgender Wert dem logischen Sektor zugeordnet werden soll, Löschen des physikalischen Speicherblocks und erneute Durchführung der Schritte c bis e mit diesem nachfolgenden Wert.

Durch eine Erweiterung des physikalischen Speichers und dessen komplette Nutzung durch eine vorgegebene bestimmte logische Speichermenge wird in vorteilhafter Weise die Lebensdauer des physikalischen Speichers erhöht. Bei Wahl eines bestimmten Größenverhältnisses zwischen dem logischen und dem physikalischen Speicher, welches z.B. in einem den Flash-Speicher steuernden Controller konFIGiert werden kann, kann die Lebensdauer eines Flash-Speichers um einen bestimmten Faktor erhöht werden, wobei der Faktor dem konFIGierten Größenverhältnis zwischen dem logischen und physikalischen Speicher entspricht.

Ein physikalischer Sektor eines Flash-Speichers stellt die kleinste Einheit zum Lesen bzw. Schreiben von Daten dar. Einzelne physikalische Sektoren können nicht gelöscht werden. Ein physikalischer Speicherblock eines Flash-Speichers umfasst eine vielfache Menge von physikalischen Sektoren und stellt gleichzeitig die kleinste Einheit von löschbaren Daten dar. Logische Sektoren stellen analog die kleinste lesbare/beschreibbare Einheit zum Lesen bzw. Schreiben in einem logischen Speicher dar. Während logische Sektoren mit neuen Werten überschrieben werden können, müssen physikalische Sektoren hingegen zuerst gelöscht werden, um ein erneutes Programmieren zu ermöglichen. Da physikalische Sektoren einzeln nicht gelöscht werden können, muss zunächst der zugehörige physikalische Speicherblock insgesamt gelöscht werden. Erst nach einer Löschung des kompletten physikalischen Speicherblocks können die physikalischen Sektoren dieses physikalischen Speicherblocks mit neuen Daten überschrieben werden. Durch mehrmaliges Löschen von physikalischen Speicherblöcken altern die zugehörigen physikalischen Sektoren. Dies hat zur Folge, dass die Bitfehlerrate mit zunehmender Anzahl von Löschprozessen ansteigt und die Data Retention Time abnimmt. Ein physikalischer Speicherblock wird dabei als "unbrauchbar" markiert, sobald ein vom Controller verwendeter sogenannter"Error Correction Code" nicht mehr in der Lage ist, die innerhalb eines physikalischen Speicherblocks vorhandenen Bitfehler zu korrigieren.

Aktuelle industriell eingesetzte Flash-Speicherkarten sind beispielsweise mit 100000 Programmier-/Löschzyklen pro physikalischem Speicherblock spezifiziert. Das heißt, dass nach 100000maligen Programmieren und/oder Löschen eines physikalischen Speicherblocks dieser physikalische Speicherblock als "unbrauchbar" zu qualifizieren ist.

Dadurch, dass für einen gegebenen logischen Speicherblock ein vergrößerter physikalischer Speicherblock zum Empfang und Speicherung von jeweils einen logischen Sektor überschreibenden neuen Werten zur Verfügung steht, wird einer Alterung jedes einzelnen physikalischen Sektors des physikalischen Speicherblocks in vorteilhafter Weise entgegengewirkt. Gleichzeitig wird die Löschung eines physikalischen Speicherblocks verzögert, dadurch, dass eine erhöhte Anzahl von physikalischen Sektoren zur Speicherung von Werten, mit welchen die logischen Sektoren überschrieben werden, zur Verfügung steht und eine Löschung des physikalischen Speicherblocks erst dann initiiert wird, wenn jeder einzelne physikalische Sektor des physikalischen Speicherblocks einen solchen Wert aufweist. Gleichzeitig erhöht sich in vorteilhafter Weise bei identischer logischer Speicherung das Schreibdatenvolumen pro Lebensdauer eines physikalischen Flash-Speichers, welches in der Industrie eine wichtige Rolle spielt. Ein weiterer Vorteil ist, dass die durchschnittliche Schreibgeschwindigkeit erhöht wird, da ein Umgruppieren der in den physikalischen Sektoren gespeicherten Daten und ein anschließendes Löschen des gesamten physikalischen Speicherblocks erst zu einem späteren Zeitpunkt erfolgt. Die Erfindung könnte daher für Speicherprodukte sowohl im industriellen Anwendungsbereich als auch im Consumerbereich Vorteile bewirken.

Nach einer Ausführungsform der Erfindung erfolgt die erneute Durchführung der Schritte c bis e in einem freien physikalischen Speicherblock, wobei der freie physikalische Speicherblock ausschließlich physikalische Sektoren aufweist, welche frei von einem Wert sind und welche bereit für die Speicherung des aktuellen Werts gemäß dem Schritt d sind.

Dies kann den Vorteil haben, dass die Verwaltung durch einen Controller, welcher zusätzlich einen sogenannten Wear Leveling Mechanismus zur Vermeidung von frühzeitigen Ausfällen von bestimmten physikalischen Sektoren verwendet, wesentlich erleichtert werden kann. Indirekt kann damit gleichzeitig in vorteilhafter Weise die sogenannte "Single Sector Random Write" Performance verbessert werden. Es kann somit in effektiver Weise dafür gesorgt werden, dass alle physikalischen Sektoren verschiedener physikalischer Speicherblöcke relativ gleichmäßig programmiert und gelöscht werden. Dadurch wird eine gleichmäßige Alterung des Flash-Speichers gewährleistet.

Nach einer Ausführungsform der Erfindung weist der physikalische Flash-Speicher während seiner Lebensdauer stets den freien physikalischen Speicherblock auf.

Dem Controller steht somit in vorteilhafter Weise stets ein physikalischer Speicherblock zur Verfügung, dessen physikalische Sektoren stets empfangsbereit für eine Speicherung eines neuen Überschreibungswerts eines logischen Sektors des logischen Speicherblocks sind. Dies ist besonders dann vorteilhaft, wenn alle physikalischen Sektoren eines anderen physikalischen Speicherblocks mit Werten belegt sind und ein neuer Überschreibungswert eines logischen Sektors nicht mehr in einen physikalischen Sektor des zuvor logisch zugeordneten Speicherblocks abgespeichert werden kann. Der freie physikalische Speicherblock steht somit stets als "Ersatzblock" zur Verfügung, welcher für eine Abspeicherung von nachfolgenden neuen Überschreibungswerten eines logischen Sektors sofort zur Verfügung steht. Während des Speicherns der weiteren neuen Überschreibungswerte der logischen Sektoren kann der bisherige zugeordnete physikalische Speicherblock umprogrammiert bzw. gelöscht werden und dann selbst die Funktion eines neuen Ersatzblocks, welcher stets zur Verfügung steht, übernehmen. Nach einer Ausführungsform der Erfindung sind die physikalischen Sektoren eines physikalischen Speicherblocks in mehrere Gruppen zusammengefasst, wobei bei Durchführung des Schrittes d, der dem aktuellen physikalischen Sektor logisch nachgeordnete physikalische Sektor des physikalischen Speicherblocks ein Sektor ist, welcher sich in einer nachfolgenden Gruppe befindet, welche der aktuellen Gruppe logisch nachfolgt, in welcher sich der aktuelle physikalische Sektor befindet.

Dies kann den Vorteil haben, dass ein Einsatz spezieller controllerspezifischer Steuerungsprogramme zur Speicherblockverwaltung eines Flash-Speichers, welche erst eine Adressierung einzelner physikalischer Sektoren erlauben, nicht notwendig ist. So wäre zum Beispiel eine fragmentbasierte Blockverwaltung, bei der nur eine vordefinierte Gruppe von physikalischen Sektoren adressiert werden kann, hinreichend.

Nach einer Ausführungsform der Erfindung sind die Gruppen der physikalischen Sektoren überschneidungsfrei.

Die Überschneidungsfreiheit der Gruppen der physikalischen Sektoren vereinfacht wesentlich jede Art von Programmierung zur Adressierung von Gruppen von physikalischen Sektoren. Zudem kann ein physikalischer Speicherblock durch die Überschneidungsfreiheit der Gruppen der physikalischen Sektoren in eine ganzzahlige Anzahl von homogenen Gruppen von physikalischen Sektoren, zum Beispiel in sogenannte Fragmente, aufgeteilt werden. Ordnet man jedem dieser Fragmente eines physikalischen Speicherblocks einen Fragmentzähler zu, so kann zum Beispiel ein controllerspezifisches Steuerungsprogramm zur Speicherblockverwaltung eines Flash-Speichers so programmiert werden, dass erst bei einem Zählerübergang des Zählers eines Endfragments eines ersten physikalischen Speicherblocks auf den Zähler eines Anfangfragments eines zweiten physikalischen Speicherblocks eine Löschung des zuvor aktuellen Speicherblocks stattfinden soll. Die Löschung eines physikalischen Speicherblocks könnte dadurch elegant hinausverzögert werden, da mittels dieser Variante der sonst üblicherweise verwendete Löschzähler, welcher mit dem physikalischen Speicherblock selbst assoziiert ist, umgangen werden könnte. Nach einer Ausführungsform der Erfindung umfasst das Verfahren ferner den Schritt des Kopierens des Inhalts aller weiteren physikalischen Sektoren, welche sich in der aktuellen Gruppe befinden, in die physikalischen Sektoren der nachfolgenden Gruppe.

Dies hat den Vorteil, dass die Information über den Wert, welcher in den physikalischen Sektoren der aktuellen Gruppe, welche keinen aktuellen Wert von ihren jeweils zugeordneten logischen Sektoren für eine Speicherung empfangenen haben, nicht verloren geht. Zur Redundanzminderung können somit alle physikalischen Sektoren der vorherigen aktuellen Gruppe als ungültig markiert werden und gleichzeitig ein eventuell assoziierter Fragmentzähler wegen Nutzung eines neuen Fragments um 1 erhöht werden. Bei einer Verwendung von controllerspezifischen Steuerungsprogrammen zur Speicherblockverwaltung eines Flash-Speichers, die eine Löschung eines physikalischen Speicherblocks erst bei einem Übergang des Fragmentzählers von einem Endfragment eines ersten physikalischen Speicherblocks zu einem Anfangsfragment eines zweiten physikalischen Speicherblocks anstelle eines Blockzählers benutzen, bleibt eine Datenintegrität und Datenkonsistenz bestehen.

Nach einer Ausführungsform der Erfindung umfasst das Verfahren ferner ein Wear Leveling, wobei das Wear Leveling ausschließlich im logischen Speicher stattfindet.

Dies hat den Vorteil, dass zum Beispiel ein von einem Controller verwendeter Wear Leveling-Mechanismus dafür sorgen kann, dass alle physikalischen Sektoren des Flash-Speichers mit der Zeit gleichmäßig programmiert und gelöscht werden können. Frühzeitigen Ausfällen von bestimmten physikalischen Sektoren könnte somit effektiv entgegengewirkt werden. Die physikalischen Sektoren des physikalischen Flash-Speichers könnten somit gleichmäßig altern. Durch eine möglichst gleichmäßige Nutzung aller physikalischen Sektoren eines Flash-Speichers könnte somit dessen effektive Lebensdauer signifikant erhöht werden. In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung einen Controller zur Steuerung eines Verfahrens zur Verlängerung der Lebensdauer eines physikalischen Flash-Speichers mit physikalischen Speicherblöcken, wobei jeder der physikalischen Speicherblöcke physikalische Sektoren aufweist, wobei jeder der physikalischen Sektoren dazu ausgebildet ist, einen Wert, welcher einem logischen Sektor eines logischen Speicherblocks eines logischen Speichers zugeordnet ist, zu empfangenen und zu speichern, wobei die Anzahl der physikalischen Sektoren pro physikalischen Speicherblock größer als die Anzahl der logischen Sektoren pro logischem Speicherblock ist, wobei der Controller dazu ausgebildet ist, folgende Schritte des Verfahrens zu steuern:
a) Zuordnung eines aktuellen Werts dem logischen Sektor,
b) Speicherung des aktuellen Werts in einem dem logischen Sektor zugeordneten aktuellen physikalischen Sektor eines physikalischen Speicherblocks,
c) Zuordnung eines nachfolgenden aktuellen Werts dem logischen Sektor, wodurch zum Erhalt eines neuen aktuellen Werts der aktuelle Wert im logischen Sektor mit dem nachfolgenden Wert überschrieben wird,
d) Speicherung des aktuellen Werts in einem dem aktuellen physikalischen Sektor logisch nachgeordneten physikalischen Sektor des physikalischen Speicherblocks und damit in einem neuen aktuellen physikalischen Sektor,
e) Wiederholung der Schritte c bis d solange, bis alle physikalischen Sektoren des physikalischen Speicherblocks einen Wert aufweisen,
f) im Falle, dass alle physikalischen Sektoren des physikalischen Speicherblocks einen Wert aufweisen und erneut ein nachfolgender Wert dem logischen Sektor zugeordnet werden soll, Löschen des physikalischen Speicherblocks und erneute Durchführung der Schritte c bis e mit diesem nachfolgenden Wert,
g) erneute Durchführung der Schritte c bis e in einem physikalischen Speicherblock, wobei der freie physikalische Speicherblock ausschließlich physikalische Sektoren aufweist, welche frei von einem Wert sind und welche bereit für die Speicherung des aktuellen Werts gemäß dem Schritt d sind.

Im Folgenden werden bevorzugte Ausführungsformen der Erfindung anhand der folgenden Zeichnungen näher erläutert. Es zeigen:
- FIG 1: ein Blockdiagramm mit Darstellung der Schnittstellen zwischen einem physikalischen Flash-Speicher und einem Controller, wobei der physikalische Flash-Speicher Werte von einem logischen Speicher zugeordnet bekommt und diese anschließend speichert,
- FIG 2 und 3: eine Darstellung zur Veranschaulichung der Funktionsweise einer sektorbasierten Blockverwaltung von logischen Sektoren eines physikalischen Flash-Speichers,
- FIG 4 und 5: eine Darstellung zur Veranschaulichung einer fragmentbasierten Speicherblockverwaltung eines physikalischen Flash-Speichers,
- FIG 6: ein Flussdiagramm zur Veranschaulichung der Verfahrensschritte zur Verlängerung der Lebensdauer eines Flash-Speichers.

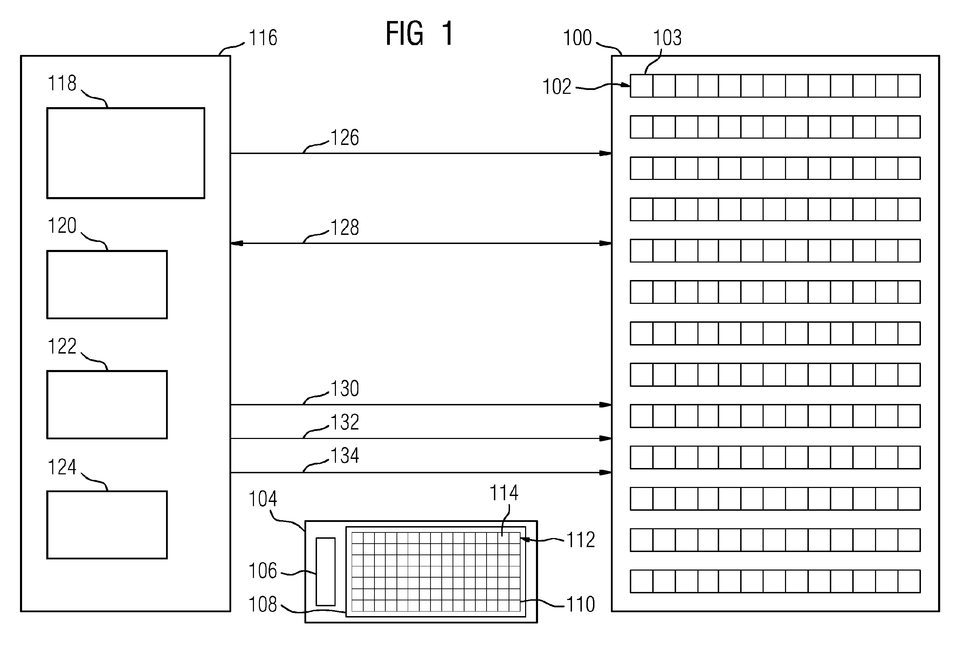

Die FIG 1 zeigt ein Blockdiagramm zur Veranschaulichung der Beziehung zwischen einem physikalischen Flash-Speicher 100, welcher von einem Controller 116 gesteuert und hinsichtlich seiner Speicherung verwaltet wird, wobei die physikalischen Sektoren 103 des physikalischen Speichers 100 zu speichernde Werte aus logischen Sektoren 114 eines logischen Speichers 110 einer Anwendung 108, welches auf einem Computersystem 104 abläuft, zugewiesen bekommen.

Der physikalische Flash-Speicher 100 weist physikalische Speicherblöcke 102 auf, welche jeweils physikalische Sektoren 103 aufweisen. Der Controller 116 ist über eine Adress-Schnittstelle 126 und eine Daten-Schnittstelle 128 mit dem physikalischen Flash-Speicher 100 verbunden. Eine Chip-Select-Schnittstelle 130 zum Aktivieren eines bestimmten Speicherbausteins des physikalischen Flash-Speichers 100, eine Steuerleitung 132 zum Auslesen von Daten aus den physikalischen Sektoren 103 des physikalischen Flash-Speichers 100 und eine weitere Steuerleitung 134 zum Schreiben von Daten in die physikalischen Sektoren 103 des physikalischen Flash-Speichers 100 bilden zusammen eine Auftrag-Schnittstelle zwischen dem Controller 116 und dem physikalischen Flash-Speicher 100.

Der Controller 116 weist eine File-Allocation-Table 118 auf, welche einer adressbasierten Verwaltung dient. Im Modul 124 des Controllers 116 befindet sich ein spezielles controllerspezifisches Steuerungsprogramm zur Verwaltung der Speicherblöcke 102 des physikalischen Flash-Speichers 100. Ein Modul 120 des Controllers 116 dient zur Durchführung eines "Error Correction Codes", welcher zur Erkennung von Bitfehlern in den physikalischen Sektoren 103 des physikalischen Flash-Speichers 100 und zu deren Korrektur dient. In Abhängigkeit vom eingesetzten "Error Correction Code" können Bitfehler bis zu einer gewissen Anzahl korrigiert werden.

Ein Modul 122 des Controllers 116 dient zur Durchführung eines Wear Leveling Mechanismus. Mit Hilfe des Wear Leveling Mechanismus soll erreicht werden, dass alle physikalischen Sektoren 103 des physikalischen Flash-Speichers 100 mit der Zahl gleichmäßig programmiert und gelöscht werden sollen, um eine gleichmäßige Alterung des Flash-Speichers 100 zu erzielen und um frühzeitigen Ausfällen von bestimmten physikalischen Sektoren 103 entgegenzuwirken.

Ein logischer Speicher 110 mit logischen Speicherblöcken 112, welcher die logischen Sektoren 114 aufweist, ist Bestandteil des Anwendungsprogramms 108, welches auf dem Computersystem 104 in Betrieb genommen werden kann. Das Computersystem 104 weist einen Prozessor 106 auf. Dabei findet das Wear Leveling ausschließlich bezüglich des logischen Speichers statt.

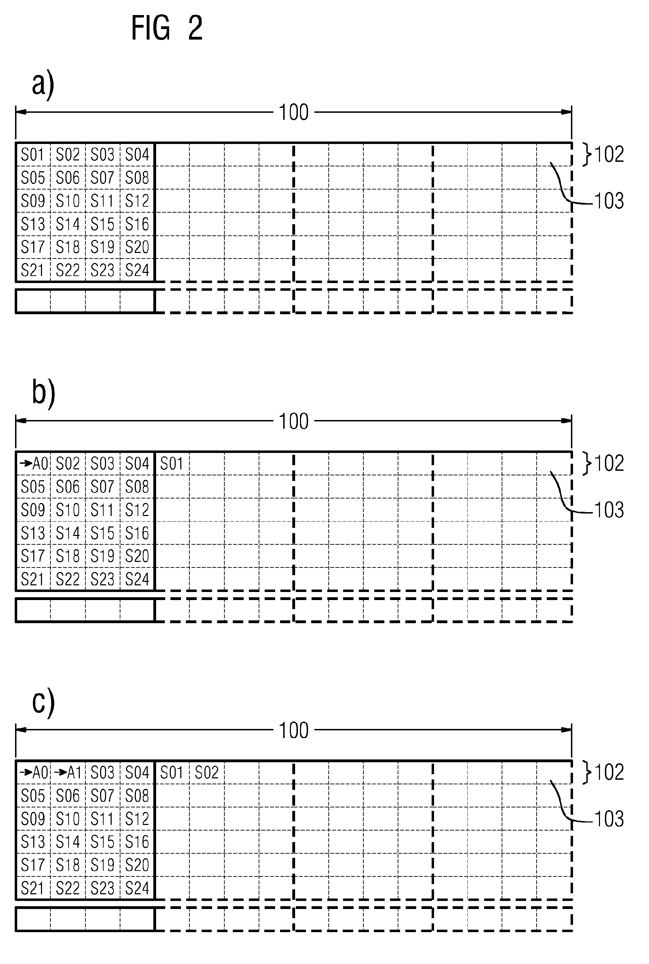

FIG 2 zeigt eine Darstellung zur Veranschaulichung der Funktionsweise einer sektorbasierten Speicherblockverwaltung eines physikalischen Flash-Speichers 100. Dargestellt sind die physikalischen Speicherblöcke 102, welche jeweils physikalische Sektoren 103 aufweisen. Projiziert auf einen Teil des physikalischen Speichers, welcher aus den physikalischen Speicherblöcken 102 besteht, ist ein logischer Speicher 110, welcher aus den logischen Speicherblöcken 112 besteht. Jeder logische Speicherblock 112 weist wiederum logische Sektoren 114 auf. In der in FIG 2 dargestellten Ausführungsform des physikalischen Flash-Speichers 100 ist der physikalische Speicher viermal so groß wie der logische Speicher. Einer der physikalischen Speicherblöcke 102 weist ausschließlich physikalische Sektoren 103 auf, welche frei von einem gespeicherten Wert sind. Dieser sogenannte Ersatzblock steht für ein Umkopieren von Daten zur Verfügung.

Ausgehend von FIG 2a bis FIG 3c wird im Folgenden ein vollständiger Löschzyklus im Rahmen einer sektorbasierten Speicherblockverwaltung beschrieben.

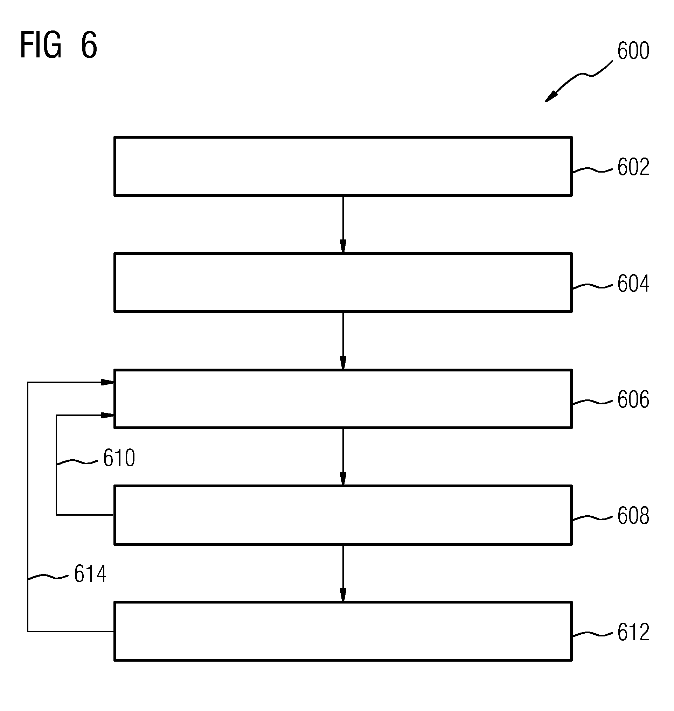

FIG 2a zeigt den Ausgangsstatus: ein vierfach so großer physikalischer Flash-Speicher 100 steht zur Speicherung von neuen aktuellen Werten für logische Sektoren 114 eines logischen Speichers 110 zur Verfügung. Inhalte der logischen Sektoren S01 bis S24 sind in den entsprechenden physikalischen Sektoren des physikalischen Speichers gespeichert. In FIG 2b wird nun ein logischer Sektor 114 (S01) des logischen Speichers 112 mit einem neuen aktuellen Wert überschrieben (Schritt 606 in FIG 6). Dieser neue aktuelle Wert des logischen Sektors 112 wird in einem dem physikalischen Sektor 202 logisch nachgeordneten physikalischen Sektor 200 des physikalischen Speicherblocks 102 des physikalischen Flash-Speichers 100 geschrieben und dort gespeichert (Schritt 608 in FIG 6). Der vorherige zugeordnete aktuelle physikalische Sektor 202 wird vom Controller 116 als ungültig markiert, wobei zusätzlich in einem Verwaltungsspeicher auf den aktuell zugeordneten physikalischen Sektor 200, welcher den neuen aktuellen Wert des logischen Sektors 114 speichert, verwiesen wird (A0). Dabei erfolgt keine Löschung des aktuellen physikalischen Speicherblocks 102.

In FIG 2c erfolgt eine Überschreibung des Werts des zweiten logischen Sektors 114 (S02) mit einem neuen aktuellen Wert (Schritt 606 in FIG 6). Dieser neue aktuelle Wert wird in den dem physikalischen Sektor 204 logisch nachgeordneten physikalischen Sektor 206 des aktuellen physikalischen Speicherblocks 102 geschrieben und dort gespeichert (Schritt 608 in FIG 6). Der physikalische Sektor 204, welcher zuvor den aktuellen Wert des logischen Sektors gespeichert hatte, wird als ungültig markiert, wobei wiederum im Verwaltungsspeicher auf den neuen aktuellen physikalischen Sektor 206, welcher den neuen aktuellen Wert des logischen Sektors speichert, verwiesen wird (A1). Auch jetzt erfolgt noch keine Löschung des aktuellen physikalischen Speicherblocks 102.

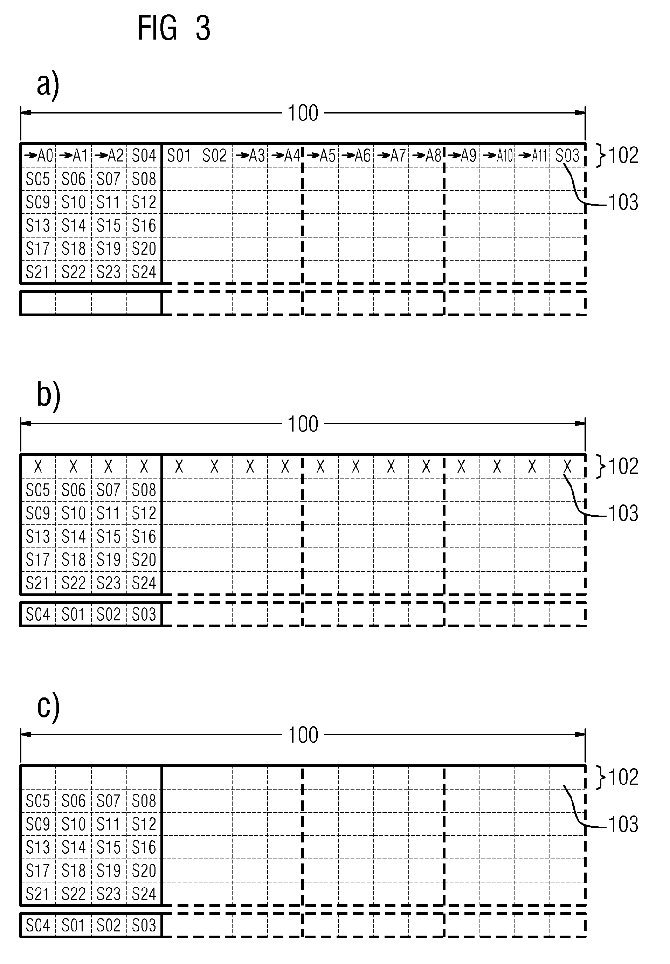

In FIG 3a erfolgt eine zehnmalige Überschreibung eines logischen Sektors S03 mit einem jeweils neuen aktuellen Wert (Schritt 606 in FIG 6). Der jeweils neue aktuelle Wert wird bei jedem erneuten Überschreiben in einen logisch nachgeordneten physikalischen Sektor des physikalischen Speicherblocks des aktuellen physikalischen Speicherblocks geschrieben und dort gespeichert (Schritt 608 in FIG 6). Die physikalischen Sektoren, in denen die vorherigen aktuellen Werte gespeichert sind, werden als ungültig markiert, wobei wiederum im Verwaltungsspeicher ein Verweis (A11) auf den neuen aktuellen physikalischen Sektor erfolgt, welcher den neuen aktuellen Wert des logischen Sektors speichert. Der letzte, noch unbelegte physikalische Sektor weist nun den aktuellen Wert des logischen Sektors auf. Bis jetzt erfolgte noch keine Löschung des aktuellen physikalischen Speicherblocks.

In FIG 3b erfolgt eine Überschreibung eines logischen Sektors (S04) des logischen Speichers mit einem weiteren aktuellen Wert (Schritt 606 in FIG 6). Dieser neue aktuelle Wert kann von keinem der logischen Sektoren des aktuellen logischen Speicherblocks 102 empfangen und gespeichert werden, da jeder der physikalischen Sektoren bereits einen Wert aufweist.

Daher wird - wie in FIG 3c dargestellt - dieser neue aktuelle Wert des logischen Sektors (S04) in einen physikalischen Sektor eines neuen logisch nachgeordneten physikalischen Speicherblock 300 (Ersatzblock) gespeichert (Schritt 606 in FIG 6), der ausschließlich physikalische Sektoren aufweist (Schritt 614 in FIG 6), welche frei von einem Wert sind. Dabei erfolgt gleichzeitig ein Umkopieren aller aktuellen Werte der jeweils aktuellen physikalischen Sektoren (S01, S02, S03) des zuvor aktuellen physikalischen Speicherblocks 102 in den neuen physikalischen Speicherblock 300. Alle Werte, die in dem zuvor aktuellen physikalischen Speicherblock 102 gespeichert wurden, werden als ungültig markiert (x), wie in FIG 3b dargestellt, und schließlich gelöscht, wie in FIG 3c dargestellt. Der physikalische Speicherblock 102, der jetzt ausschließlich physikalische Sektoren aufweist, welche nicht mit einem Wert belegt sind, wird als ein neuer Ersatzblock verwendet.

In dem nun aktuellen physikalischen Speicherblock 300 wiederholen sich die Schritte 606 bis 610, wie sie bereits in dem zuvor aktuellen physikalischen Speicherblock 102 analog abgelaufen sind und wie sie im Flussdiagramm in FIG 6 schematisch dargestellt sind.

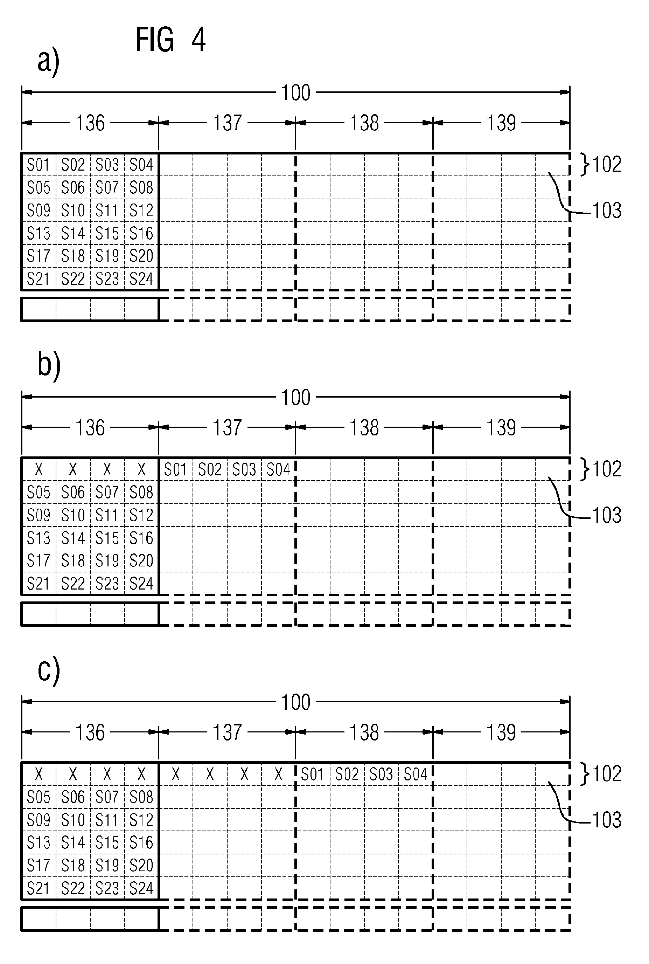

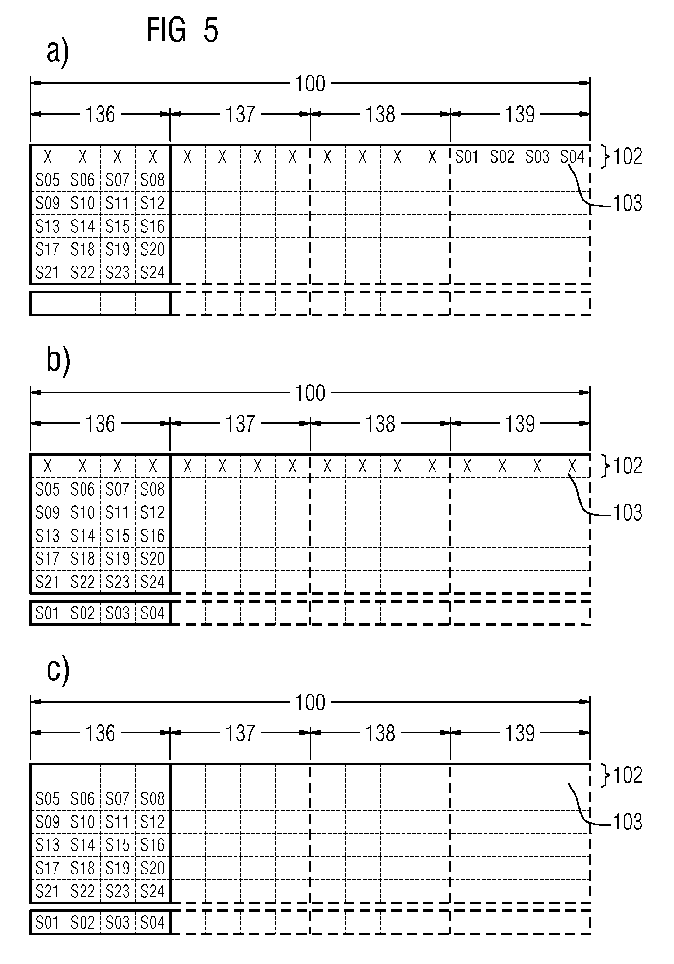

FIG 4 und FIG 5 beinhalten eine Veranschaulichung einer fragmentbasierten Speicherblockverwaltung. Dabei ist ausgehend von FIG 4b bis FIG 5f ein kompletter Löschzyklus dargestellt.

Auch in dieser Ausführungsform der Speicherblockverwaltung ist der physikalische Speicher viermal größer als der logische Speicher, wie in FIG 4a dargestellt. Jeder physikalische Speicherblock 102 ist in Fragmente 136, 137, 138, 139 aufgeteilt, wobei ein Fragment eine Gruppe von physikalischen Sektoren beinhaltet. Dabei sind die Gruppen der physikalischen Sektoren jeweils überschneidungsfrei. Die Anzahl der Fragmente pro physikalischen Speicherblock entspricht der Relation zwischen logischem und physikalischem Speicher. Ein physikalischer Speicherblock, welcher ausschließlich physikalische Sektoren aufweist, welche frei von einem Wert sind, dient auch in dieser Ausführungsform für ein Umgruppieren von Daten aus einem anderen physikalischen Speicherblock.

In FIG 4b wird ein Wert eines logischen Sektors 114 (S01) des logischen Speichers 110 innerhalb eines logischen Speicherblocks 112 überschrieben (Schritt 606 in FIG 6). Es erfolgt keine Löschung des aktuell zugeordneten physikalischen Speicherblocks 102. Stattdessen werden die Werte der physikalischen Sektoren des aktuellen Fragments in das logisch nachgeordnete Fragment 137 umgruppiert, wobei der aktuelle Wert, mit dem der logische Sektor überschrieben worden ist, in dem dem logischen Sektor zugeordneten physikalischen Sektor gespeichert wird (Schritt 608 in FIG 6). Das vorher aktuelle Fragment 136 in dem aktuellen physikalischen Speicherblock 112 wird dabei als ungültig markiert.

In FIG 4c wird ein anderer logischer Sektor (S02) mit einem neuen aktuellen Wert überschrieben (Schritt 606 in FIG 6). Wieder erfolgt keine Löschung des aktuellen physikalischen Speicherblocks 112. Stattdessen werden die Werte der physikalischen Sektoren des Fragments 137 in das nächste logisch nachgeordnete Fragment 138 umgruppiert, wobei wiederum der neue Wert, mit dem der logische Sektor (S02) überschrieben wurde, in einen dem logischen Sektor zugeordneten aktuellen physikalischen Sektor geschrieben wird (Schritt 608 in FIG 6). Die nicht aktualisierten Werte der logischen Sektoren (S01, S03, S04) werden dabei mit in das Fragment 138 kopiert. Das zuvor aktuelle Fragment 137 des aktuellen physikalischen Speicherblocks wird als ungültig markiert (x).

In FIG 5a wird ein weiterer logischer Sektor (S03) des logischen Speichers mit einem neuen aktuellen Wert überschrieben (Schritt 606 in FIG 6). Wieder erfolgt noch keine Löschung des aktuellen physikalischen Speicherblocks 102. Stattdessen werden die Werte der physikalischen Sektoren (S01, S02, S03, S04) des Fragments 138 in die physikalischen Sektoren des logisch nachgeordneten Fragments 139 umgruppiert. Dabei wird gleichzeitig der neue aktuelle Wert des logischen Sektors (S03) in den dem logischen Sektor zugeordneten aktuellen physikalischen Sektor des logisch nachgeordneten Fragments 139 geschrieben (Schritt 608 in FIG 6). Die physikalischen Sektoren des Fragments 138 im aktuellen physikalischen Speicherblock werden als ungültig markiert (x).

In FIG 5b wird ein weiterer logischer Sektor (S04) mit einem neuen aktuellen Wert überschrieben (Schritt 606 in FIG 6). Der aktuelle physikalische Speicherblock 102 weist zu diesem Zeitpunkt ausschließlich physikalische Sektoren auf, die bereits einen Wert gespeichert haben. Daher werden die jeweils aktuellen Werte der physikalischen Sektoren des Fragments 139 des zuvor aktuellen physikalischen Speicherblocks 102 in das logisch nachgeordnete Fragment 136 des Ersatzblocks 300 umkopiert, wobei der neue aktuelle Wert des logischen Sektors (S04) in den dem logischen Sektor aktuell zugeordneten physikalischen Sektor geschrieben wird (Schritt 608 in FIG 6). Wie in FIG 5b ersichtlich, wurden dabei alle Werte, die in den physikalischen Sektoren des zuvor aktuellen Speicherblocks 102 gespeichert waren, als ungültig markiert (x). Danach erfolgt, wie in FIG 5c ersichtlich, eine Löschung der Werte der physikalischen Sektoren des zuvor aktuellen physikalischen Speicherblocks 102 (Schritt 612 in FIG 6). Dieser Block gilt nun als Ersatzblock. In dem nun aktuellen physikalischen Speicherblock 300, von dem bisher nur ein Fragment 136 mit Werten belegt ist, erfolgen wiederholt die Schritte 606 bis 610 aus FIG 6, wie sie bereits oben beschrieben wurden.

FIG 6 stellt ein Flussdiagramm 600 zur Veranschaulichung der Verfahrensschritte zur Verlängerung der Lebensdauer eines Flash-Speichers dar. In Schritt 602 wird einem logischen Sektor 114 eines logischen Speicherblocks 112 eines logischen Speichers 110 ein aktueller Wert zugeordnet. In Schritt 604 erfolgt eine Speicherung des aktuellen Werts in einem dem logischen Sektor zugeordneten aktuellen physikalischen Sektor 103 eines physikalischen Speicherblocks 102. In Schritt 606 wird dem logischen Sektor ein nachfolgender aktueller Wert zugeordnet, wodurch zum Erhalt eines neuen aktuellen Werts der aktuelle Wert im logischen Sektor 114 mit dem nachfolgenden Wert überschrieben wird. In Schritt 608 erfolgt eine Speicherung des aktuellen Werts in einem dem aktuellen physikalischen Sektor logischen nachgeordneten physikalischen Sektor des physikalischen Speicherblocks, welcher den nun neuen aktuellen physikalischen Sektor darstellt. In Schritt 610 werden die Schritte 606 - 608 so lange wiederholt, bis alle physikalischen Sektoren 103 des physikalischen Speicherblocks 102 einen Wert aufweisen. Im Falle, dass alle physikalischen Sektoren 103 des physikalischen Speicherblocks 102 einen Wert aufweisen und erneut ein nachfolgender Wert dem logischen Sektor 114 zugeordnet werden soll, erfolgt im Schritt 612 ein Löschen des physikalischen Speicherblocks 112. In Schritt 614 erfolgt eine erneute Durchführung der Schritte 606 bis 610 mit diesem nachfolgenden Wert, wobei die erneute Durchführung der Schritte 606 - 610 in einem freien physikalischen Speicherblock erfolgt, wobei der freie physikalische Speicherblock ausschließlich physikalische Sektoren aufweist, welche frei von einem Wert sind und welche bereit für die Speicherung des aktuellen Werts gemäß dem Schritt 608 sind. Dabei muss Schritt 612 nicht in zeitlicher Reihenfolge, wie oben beschrieben, stattfinden, sondern kann auch unmittelbar zwischen dem Schritt 608 und dem Schritt 606 stattfinden.

## Patentansprüche

1. Verfahren zur Verlängerung der Lebensdauer eines physikalischen Flash-Speichers (100) mit physikalischen Speicherblöcken (102), wobei jeder der physikalischen Speicherblöcke (102) physikalische Sektoren (103) aufweist, wobei jeder der physikalischen Sektoren (103) dazu ausgebildet ist, einen Wert, welcher einem logischen Sektor (114) eines logischen Speicherblocks (112) eines logischen Speichers (110) zugeordnet ist, zu empfangen und zu speichern, wobei die Anzahl der physikalischen Sektoren (103) pro physikalischen Speicherblock (102) größer als die Anzahl der logischen Sektoren (114) pro logischem Speicherblock (112) ist, wobei das Verfahren folgende Schritte umfasst:
a. Zuordnung (602) eines aktuellen Werts dem logischen Sektor (114),
b. Speicherung (604) des aktuellen Werts in einem dem logischen Sektor (114) zugeordneten aktuellen physikalischen Sektor (103) eines physikalischen Speicherblocks (102),
c. Zuordnung (606) eines nachfolgenden aktuellen Werts dem logischen Sektor (114), wodurch zum Erhalt eines neuen aktuellen Werts der aktuelle Wert im logischen Sektor (114) mit dem nachfolgenden Wert überschrieben wird,
d. Speicherung (608) des aktuellen Werts in einem dem aktuellen physikalischen Sektor (103) logisch nachgeordneten physikalischen Sektor (103) des physikalischen Speicherblocks (102) und damit in einem neuen aktuellen physikalischen Sektor,
e. Wiederholung (610) der Schritte c (606) bis d (608) so lange bis alle physikalischen Sektoren (103) des physikalischen Speicherblocks (102) einen Wert aufweisen,
f. im Falle, dass alle physikalischen Sektoren (103) des physikalischen Speicherblocks (102) einen Wert aufweisen und erneut ein nachfolgender Wert dem logischen Sektor (114) zugeordnet werden soll, Löschen (612) des physikalischen Speicherblocks (102) und erneute Durchführung (614) der Schritte c (606) bis e (610) mit diesem nachfolgenden Wert.

2. Verfahren nach Anspruch 1, wobei die erneute Durchführung der Schritte c bis e in einem freien physikalischen Speicherblock (102) erfolgt, wobei der freie physikalische Speicherblock (102) ausschließlich physikalische Sektoren (103) aufweist, welche frei von einem Wert sind und welche bereit für die Speicherung des aktuellen Werts gemäß dem Schritt d sind.

3. Verfahren nach Anspruch 2, wobei der physikalische Flash-Speicher (100) während seiner Lebensdauer stets den freien physikalischen Speicherblock (102) aufweist.

4. Verfahren nach einem der vorhergehenden Ansprüche, wobei die physikalischen Sektoren (103) eines physikalischen Speicherblocks (102) in mehrere Gruppen zusammengefasst sind, wobei bei Durchführung des Schrittes d) der dem aktuellen physikalischen Sektor (103) logisch nachgeordnete physikalische Sektor (103) des physikalischen Speicherblocks (102) ein Sektor ist, welcher sich in einer nachfolgenden Gruppe befindet, welche der aktuellen Gruppe logisch nachfolgt, in welcher sich der aktuelle physikalische Sektor (103) befindet.

5. Verfahren nach einem der vorhergehenden Ansprüche, wobei die Gruppen der physikalischen Sektoren (103) überschneidungsfrei sind.

6. Verfahren nach einem der vorhergehenden Ansprüche 4 oder 5, ferner mit dem Schritt des Kopierens des Inhalts aller weiteren physikalischen Sektoren (103), welche sich in der aktuellen Gruppe befinden, in die physikalischen Sektoren (103) der nachfolgenden Gruppe.

7. Verfahren nach einem der vorhergehenden Ansprüche, wobei das Verfahren ferner ein Wear Leveling umfasst, wobei das Wear Leveling ausschließlich im logischen Speicher (110) stattfindet.

8. Computerprogrammprodukt mit von einem Prozessor ausführbaren Instruktionen zur Durchführung der Verfahrensschritte gemäß einem der vorigen Ansprüche.

9. Controller zur Steuerung eines Verfahrens zur Verlängerung der Lebensdauer eines physikalischen Flash-Speichers (100) mit physikalischen Speicherblöcken (102), wobei jeder der physikalischen Speicherblöcke (102) physikalische Sektoren (103)aufweist, wobei jeder der physikalischen Sektoren (103) dazu ausgebildet ist, einen Wert, welcher einem logischen Sektor (114) eines logischen Speicherblocks (112) eines logischen Speichers (110) zugeordnet ist, zu empfangen und zu speichern, wobei die Anzahl der physikalischen Sektoren (103) pro physikalischen Speicherblock größer als die Anzahl der logischen Sektoren (114) pro logischem Speicherblock (112) ist, wobei der Controller (116) dazu ausgebildet ist, folgende Schritte des Verfahrens zu steuern:
a. Zuordnung eines aktuellen Werts dem logischen Sektor (114),
b. Speicherung des aktuellen Werts in einem dem logischen Sektor (114) zugeordneten aktuellen physikalischen Sektor (103) eines physikalischen Speicherblocks (102),
c. Zuordnung eines nachfolgenden aktuellen Werts dem logischen Sektor (114), wodurch zum Erhalt eines neuen aktuellen Werts der aktuelle Wert im logischen Sektor (114) mit dem nachfolgenden Wert überschrieben wird,
d. Speicherung des aktuellen Werts in einem dem aktuellen physikalischen Sektor (103) logisch nachgeordneten physikalischen Sektor (103) des physikalischen Speicherblocks (102) und damit in einem neuen aktuellen physikalischen Sektor (103),
e. Wiederholung der Schritte c bis d so lange bis alle physikalischen Sektoren (103) des physikalischen Speicherblocks (102) einen Wert aufweisen,
f. im Falle, dass alle physikalischen Sektoren (103) des physikalischen Speicherblocks (102) einen Wert aufweisen und erneut ein nachfolgender Wert dem logischen Sektor (114) zugeordnet werden soll, Löschen des physikalischen Speicherblocks (102) und erneute Durchführung der Schritte c bis e mit diesem nachfolgenden Wert,
g. erneute Durchführung der Schritte c bis e in einem freien physikalischen Speicherblock, wobei der freie physikalische Speicherblock ausschließlich physikalische Sektoren (103) aufweist, welche frei von einem Wert sind und welche bereit für die Speicherung des aktuellen Werts gemäß dem Schritt d sind.

## Geänderte Patentansprüche

### Geänderte Patentansprüche gemäss Regel 137(2) EPÜ.

**1.** Verfahren zur Verlängerung der Lebensdauer eines physikalischen Flash-Speichers (100) mit physikalischen Speicherblöcken (102), wobei jeder der physikalischen Speicherblöcke (102) physikalische Sektoren (103) aufweist, wobei jeder der physikalischen Sektoren (103) dazu ausgebildet ist, einen Wert, welcher einem logischen Sektor (114) eines logischen Speicherblocks (112) eines logischen Speichers (110) zugeordnet ist, zu empfangen und zu speichern, wobei die Anzahl der physikalischen Sektoren (103) pro physikalischen Speicherblock (102) größer als die Anzahl der logischen Sektoren (114) pro logischem Speicherblock (112) ist, wobei das Verfahren folgende Schritte umfasst:
a. Zuordnung (602) eines aktuellen Werts dem logischen Sektor (114),
b. Speicherung (604) des aktuellen Werts in einem dem logischen Sektor (114) zugeordneten aktuellen physikalischen Sektor (103) eines physikalischen Speicherblocks (102),
c. Zuordnung (606) eines nachfolgenden aktuellen Werts dem logischen Sektor (114), wodurch zum Erhalt eines neuen aktuellen Werts der aktuelle Wert im logischen Sektor (114) mit dem nachfolgenden Wert überschrieben wird,
d. Speicherung (608) des aktuellen Werts in einem dem aktuellen physikalischen Sektor (103) logisch nachgeordneten physikalischen Sektor (103) des physikalischen Speicherblocks (102) und damit in einem neuen aktuellen physikalischen Sektor,
e. Wiederholung (610) der Schritte c (606) bis d (608) so lange bis alle physikalischen Sektoren (103) des physikalischen Speicherblocks (102) einen Wert aufweisen,
f. im Falle, dass alle physikalischen Sektoren (103) des physikalischen Speicherblocks (102) einen Wert aufweisen und erneut ein nachfolgender Wert dem logischen Sektor (114) zugeordnet werden soll, Löschen (612) des physikalischen Speicherblocks (102) und erneute Durchführung (614) der Schritte c (606) bis e (610) mit diesem nachfolgenden Wert,
wobei die physikalischen Sektoren (103) eines physikalischen Speicherblocks (102) in mehrere Gruppen zusammengefasst sind, wobei bei Durchführung des Schrittes d) der dem aktuellen physikalischen Sektor (103) logisch nachgeordnete physikalische Sektor (103) des physikalischen Speicherblocks (102) ein Sektor ist, welcher sich in einer nachfolgenden Gruppe befindet, welche einer aktuellen Gruppe logisch nachfolgt, in welcher sich der aktuelle physikalische Sektor (103) befindet, wobei die mehreren Gruppen, in die die physikalischen Sektoren (103) des Speicherblocks (102) zusammengefasst sind, überschneidungsfrei sind.

**2.** Verfahren nach Anspruch 1, wobei die erneute Durchführung der Schritte c bis e in einem freien physikalischen Speicherblock (102) erfolgt, wobei der freie physikalische Speicherblock (102) ausschließlich physikalische Sektoren (103) aufweist, welche frei von einem Wert sind und welche bereit für die Speicherung des aktuellen Werts gemäß dem Schritt d sind.

**3.** Verfahren nach Anspruch 2, wobei der physikalische Flash-Speicher (100) während seiner Lebensdauer stets den freien physikalischen Speicherblock (102) aufweist.

**4.** Verfahren nach einem der vorhergehenden Ansprüche, ferner mit dem Schritt des Kopierens des Inhalts aller weiteren physikalischen Sektoren (103), welche sich in der aktuellen Gruppe befinden, in die physikalischen Sektoren (103) der nachfolgenden Gruppe.

**5.** Verfahren nach einem der vorhergehenden Ansprüche, wobei das Verfahren ferner ein Wear Leveling umfasst, wobei das Wear Leveling ausschließlich im logischen Speicher (110) stattfindet.

**6.** Computerprogrammprodukt mit von einem Prozessor ausführbaren Instruktionen zur Durchführung der Verfahrensschritte gemäß einem der vorigen Ansprüche.

**7.** Controller zur Steuerung eines Verfahrens zur Verlängerung der Lebensdauer eines physikalischen Flash-Speichers (100) mit physikalischen Speicherblöcken (102), wobei jeder der physikalischen Speicherblöcke (102) physikalische Sektoren (103)aufweist, wobei jeder der physikalischen Sektoren (103) dazu ausgebildet ist, einen Wert, welcher einem logischen Sektor (114) eines logischen Speicherblocks (112) eines logischen Speichers (110) zugeordnet ist, zu empfangen und zu speichern, wobei die Anzahl der physikalischen Sektoren (103) pro physikalischen Speicherblock größer als die Anzahl der logischen Sektoren (114) pro logischem Speicherblock (112) ist, wobei der Controller (116) dazu ausgebildet ist, folgende Schritte des Verfahrens zu steuern:
a. Zuordnung eines aktuellen Werts dem logischen Sektor (114),
b. Speicherung des aktuellen Werts in einem dem logischen Sektor (114) zugeordneten aktuellen physikalischen Sektor (103) eines physikalischen Speicherblocks (102),
c. Zuordnung eines nachfolgenden aktuellen Werts dem logischen Sektor (114), wodurch zum Erhalt eines neuen aktuellen Werts der aktuelle Wert im logischen Sektor (114) mit dem nachfolgenden Wert überschrieben wird,
d. Speicherung des aktuellen Werts in einem dem aktuellen physikalischen Sektor (103) logisch nachgeordneten physikalischen Sektor (103) des physikalischen Speicherblocks (102) und damit in einem neuen aktuellen physikalischen Sektor (103),
e. Wiederholung der Schritte c bis d so lange bis alle physikalischen Sektoren (103) des physikalischen Speicherblocks (102) einen Wert aufweisen,
f. im Falle, dass alle physikalischen Sektoren (103) des physikalischen Speicherblocks (102) einen Wert aufweisen und erneut ein nachfolgender Wert dem logischen Sektor (114) zugeordnet werden soll, Löschen des physikalischen Speicherblocks (102) und erneute Durchführung der Schritte c bis e mit diesem nachfolgenden Wert,
g. erneute Durchführung der Schritte c bis e in einem freien physikalischen Speicherblock, wobei der freie physikalische Speicherblock ausschließlich physikalische Sektoren (103) aufweist, welche frei von einem Wert sind und welche bereit für die Speicherung des aktuellen Werts gemäß dem Schritt d sind,
wobei die physikalischen Sektoren (103) eines physikalischen Speicherblocks (102) in mehrere Gruppen zusammengefasst sind, wobei bei Durchführung des Schrittes d) der dem aktuellen physikalischen Sektor (103) logisch nachgeordnete physikalische Sektor (103) des physikalischen Speicherblocks (102) ein Sektor ist, welcher sich in einer nachfolgenden Gruppe befindet, welche einer aktuellen Gruppe logisch nachfolgt, in welcher sich der aktuelle physikalische Sektor (103) befindet, wobei die mehreren Gruppen, in die die physikalischen Sektoren (103) des Speicherblocks (102) zusammengefasst sind, überschneidungsfrei sind.
